# EUROPÄISCHE PATENTANMELDUNG

(11) **EP 2 636 977 A1**
(43) Veröffentlichungstag der Anmeldung: **11.09.2013**
(21) Anmeldenummer: 12158410.6
(22) Anmeldetag: 07.03.2012
(51) Int. Cl.: F26B 5/14, F26B 7/00, C10L 5/44

(54) **Verfahren zur Verringerung des Feuchtegehalts eines schüttfähigen, vorzugsweise organischen Rohmaterials**

(71) Anmelder: Hofer, Kurt, 1180 Wien (AT)
(72) Erfinder: Hofer, Kurt, 1180 Wien (AT)
(74) Vertreter: Weiser, Philipp Heribert

(57) **Zusammenfassung**

Die Erfindung betrifft ein Verfahren zur Verringerung des Feuchtegehalts eines schüttfähigen, vorzugsweise organischen Rohmaterials, wie etwa Hackgut oder Späne, insbesondere aus Holz, wobei das Rohmaterial eine Anfangsfeuchte aufweist und wobei das Verfahren durch die folgenden Schritte gekennzeichnet ist: kontinuierliches Zuführen des Rohmaterials in eine mechanische, kontinuierliche Presse; mechanisches Auspressen des Materials in der kontinuierlichen Presse zu einem schüttfähigen Zwischenmaterial, das eine Zwischenproduktfeuchte aufweist; und thermisches Trocknen des zwischenproduktfeuchten Zwischenmaterials zu einem pelletierbaren Schüttgut, welches eine Verarbeitungsfeuchte aufweist.

## Beschreibung

Die Erfindung betrifft ein Verfahren zur Verringerung des Feuchtegehalts eines schüttfähigen, vorzugsweise organischen Rohmaterials, wie etwa Hackgut oder Späne, insbesondere aus Holz, wobei das Rohmaterial eine Anfangsfeuchte aufweist, sowie Verfahren zur Herstellung von aus diesem Rohmaterial gewinnbaren Endprodukten.

Zur Pelletierung feuchter organischer Materialien, insbesondere Hackgut oder Späne aus Holz, ist es erforderlich, das Material vor der Pelletierung zu entwässern. Dies geschieht derzeit üblicherweise in einem Band- oder Trommeltrockner unter Zuführung von Wärmeenergie, wobei die Feuchte von etwa 50 Gew.-% des Rohmaterials auf etwa 12 Gew.-% reduziert wird.

Der Energieaufwand für die Trocknung ist beträchtlich und wirkt sich negativ auf die Herstellungskosten und die Energiebilanz der Pelletserzeugung aus. Es wäre daher wünschenswert über ein Verfahren zu verfügen, mit dem die Entfeuchtung des pelletierbaren Materials kostengünstiger und energiesparender als bisher möglich ist. Das Verfahren soll sowohl im kleinen Maßstab, als auch bei industrieller Herstellung verwendbar sein.

Die gegenständliche Erfindung löst diese Anforderungen durch ein Verfahren der eingangs genannten Art, welches durch die folgenden Schritte gekennzeichnet ist: kontinuierliches Zuführen des Rohmaterials in eine mechanische, kontinuierliche Presse; mechanisches Auspressen des Materials in der kontinuierlichen Presse zu einem schüttfähigen Zwischenmaterial, das eine Zwischenproduktfeuchte aufweist; und thermisches Trocknen des zwischenproduktfeuchten Zwischenmaterials zu einem pelletierbaren Schüttgut, welches eine Verarbeitungsfeuchte aufweist. Durch das Vorsehen eines kontinuierlichen, mechanischen Pressvorgangs, wird der Energiebedarf für die Trocknung des Materials erheblich verringert, da für einen erheblichen Teil der im Holz enthaltenen Feuchtigkeit keine Verdunstungsenergie aufgewendet werden muss.

In vorteilhafter Weise kann das mechanische Auspressen in einer Schneckenpresse, vorzugsweise in einer Hochdruckpresse, beispielsweise mit einem Betriebsdruck von etwa 300 bar axial, erfolgen. Eine solche Presse ist robust und wenig fehleranfällig. Auch grobe Rohmaterialien lassen sich mit einer Schneckenpresse gut verarbeiten, wobei in der Schneckenpresse eine zusätzliche Zerkleinerung und Homogenisierung des Rohmaterials erfolgen kann, was bei manchen Materialien, wie etwa bei Hackschnitzeln, gewünscht und vorteilhaft sein kann.

Erfindungsgemäß kann weiters das thermische Trocknen in einem Trommeltrockner oder einem Bandtrockner erfolgen. Da das Material, das dem Bandtrockner zugeführt wird, bereits mechanisch auf eine Zwischenproduktfeuchte entfeuchtet wurde, ist für die Trocknung im Bandtrockner ein viel geringerer Energieaufwand erforderlich, als dies bisher der Fall war. Auch hat sich das Material bereits beim vorangegangenen mechanischen Pressen erwärmt, was ebenfalls den Heizaufwand im Bandtrockner verringert.

In einer vorteilhaften Ausführungsform der Erfindung kann die Anfangsfeuchte im Bereich von etwa 35 - 60 Gew.-%, die Zwischenproduktfeuchte im Bereich von etwa 25 - 35 Gew.-% und die Verarbeitungsfeuchte im Bereich von etwa 10 - 15 Gew.-% liegen. Die Angabe "Gew.-%" ist jeweils auf das Gesamtgewicht des jeweiligen Stoffes bezogen. Die genauen Parameter sind vom zu verarbeitenden Material abhängig. Bei zellulärem, organischem Material kann im Allgemeinen im mechanischen Pressschritt insbesondere der Flüssigkeitsanteil aus dem Material herausgepresst werden, der nicht zellulär gebunden ist.

Laut Literatur ist die Zellsättigung (Fasersättigung) bei Holz bei etwa 28% Feuchtigkeit erreicht. Die über diesem Wert liegende Feuchtigkeit liegt als "freies", nicht in die Zellstruktur eingebundenes Wasser vor. Die bisher vom Anmelder durchgeführten Versuche legen den Schluss nahe, dass sich das Verhältnis zwischen den Feuchtigkeitsanteilen, die im mechanischen Pressschritt und dem Schritt des thermischen Trocknens dem Material entzogen werden, im Wesentlichen aus dem Verhältnis zwischen zellulär gebundener und nicht zellulär gebundener Feuchtigkeit bestimmt.

Demgemäß kann in vorteilhafter Weise, wenn das Rohmaterial Späne sind, die Anfangsfeuchte bevorzugt im Bereich von etwa 50 - 60 Gew.-%, die Zwischenproduktfeuchte im Bereich von etwa 27 - 33 Gew.-% und die Endfeuchte im Bereich von etwa 10 - 13 Gew.-% liegen. Wenn das Rohmaterial Hackgut ist, kann die Anfangsfeuchte in vorteilhafter Weise im Bereich von etwa 35 - 45 Gew.-% die Zwischenproduktfeuchte im Bereich von etwa 25 - 38 Gew.-% und die Verarbeitungsfeuchte im Bereich von etwa 10 - 13 Gew.-% liegen. Die genauen Werte für jedes Rohmaterial können von einem Fachmann bei Kenntnis der in dieser Druckschrift enthaltenen Lehren durch Versuche ermittelt werden.

In einer vorteilhaften Ausführungsform der gegenständlichen Erfindung kann das Verfahren dadurch gekennzeichnet sein, dass das Hackgut vor der Verarbeitung homogenisiert wird. Ein Homogenisieren kann durch Zerkleinern des Materials erfolgen, oder durch herkömmliche Siebe- und/oder Sortierverfahren. Zusätzlich erfolgt eine Homogenisierung während des mechanischen Pressens, wobei insbesondere größere Hackschnitzelt in der Schneckenpresse nicht nur ausgepresst, sondern gleichzeitig auch zerkleinert werden. Diese Homogenisierung in der Presse kann eine nachfolgende Pelletierung erleichtern.

Eine weitere vorteilhafte Ausführungsform der Erfindung kann vorsehen, dass die mechanisch ausgepresste Flüssigkeit (Pressflüssigkeit) gesammelt und einer Weiterverarbeitung zugeführt wird. Dies ermöglicht eine vollständige Verwertung aller werthaltigen Bestandteile des Rohstoffs Holz.

In vorteilhafter Weise kann die Pressflüssigkeit zur Erzeugung eines Lebensmittel- und/oder Gesundheitsprodukts gereinigt werden. Dabei kann insbesondere von einer positiven energetischen Wirkung des aus dem Holz unterschiedlicher Bäume gewonnenen Wassers Nutzen gezogen werden. Dabei ist neben den Wirkungen von in der Flüssigkeit nachweisbar enthaltener Wirkstoffe auch der Einfluss potenzierter Wirkstoffe zu berücksichtigen, wie sie etwa aus der Homöopathie bekannt sind.

In einer weiteren vorteilhaften Ausführungsform der Erfindung können aus der Pressflüssigkeit wirkstoffhaltige Substanzen, insbesondere ätherische Holzinhaltsstoffe, wie etwa Öle und Harze, extrahiert und einer Weiterverarbeitung bzw. einem Vertrieb zugeführt werden. Die Qualität und der Wert dieser Stoffe können dabei nicht nur von der verwendeten Holzart, sondern auch von der Herkunft des Holzes beeinflusst werden. Dadurch können regional spezifische Produkte hergestellt werden, die beispielsweise aufgrund eines besonderen Klimas in dem Wald, aus dem das Holz stammt, besondere Eigenschaften aufweisen können. Solche besonderen Eigenschaften können auch einem Lebensmittelprodukt zukommen.

Die Erfindung betrifft weiters ein Verfahren zu Herstellung von Pellets aus einem schüttfähigen Rohmaterial, das eine Anfangsfeuchte aufweist, wobei ein durch eines der oben beschriebenen Verfahren aus dem Rohmaterial hergestelltes pelletierbares Schüttgut, welches eine Verarbeitungsfeuchte aufweist, zu Pellets gepresst wird. Dieses Verfahren verbessert den herkömmlichen Pellettierungsvorgang unter Verwendung bewährter Maschinen (insbesondere einer kontinuierlichen Hochdruck- Schraubenpresse) in einer innovativen und technisch vorteilhaften Weise.

Weiters betrifft die Erfindung ein Verfahren zur Herstellung von Lebensmittel- oder Gesundheitsprodukten aus der in einem zuvor beschriebenen Verfahren beim mechanischen Auspressen erhaltenen Pressflüssigkeit, wobei die Pressflüssigkeit zu einem physiologisch verträglichen Stoff gereinigt wird. Je nach Qualität und erzielbarem Wert des Lebensmittel- oder Gesundheitsprodukts kann dieses ein Nebenprodukt der Pelletserzeugung sein, oder die Pellets selbst können bei einem wirtschaftlichen Erfolg der erzeugten Flüssigkeit als Nebenprodukt betrachtet werden.

Ähnliches gilt für ein weiteres erfindungsgemäßes Verfahren zur Herstellung eines ätherischen Nebenprodukts aus der in einem zuvor beschriebenen Verfahren beim mechanischen Auspressen erhaltenen Pressflüssigkeit, wobei Holzinhaltsstoffe, wie etwa Öle und Harze, aus der Pressflüssigkeit extrahiert werden.

Die Erfindung wird im Folgenden anhand beispielhaft dargelegter experimentell durchgeführter Versuche eingehend erläutert.

Die Versuche wurden mit einer Schneckenpresse der Firma HF Press-LipidTech mit der Typenbezeichnung EP19 durchgeführt. Laut Herstellerangaben beträgt die Nennleistung der Schneckenpresse 500 - 1000 kg/h (Input). Die Schneckenpresse EP19 wurde auf das mitgelieferte Untergestell aufgeschraubt, der Motor montiert und mittels Keilriemen an das Getriebe angeschlossen. Der vor Ort angefertigte Einfülltrichter wurde an den Einlaufstutzen der mitgelieferten Zuführschnecke angeschraubt. Zur Kühlung des Getriebes wurde ein provisorischer Kühlkreislauf installiert. Ein Container für das gepresste Material und ein Container für das Wasser wurde unter das Gestell platziert. Die Verkleidung der Entwässerungsschnecke wurde auf einer Seite nicht montiert um den Vorgang beobachten zu können.

Die Zielvorgaben der Versuche wurden wie folgt definiert:
- Mit der Vorentwässerung durch die Schraubenpresse soll das Material vorerst von etwa 50% auf etwa 25% entwässert werden. Von etwa 25% auf etwa 12% soll weiterhin mit dem Bandtrockner entwässert werden.
- Die Energiekosten sollen durch den Ersatz von Wärmeenergie durch mechanische Energie gesenkt werden, wobei rechnerisch eine mögliche Senkung auf bis zu 55% des bisherigen Wertes ermittelt wurde. Die Ersparnis ergibt sich vor allem aus der Verringerung des für die Wärmeerzeugung erforderlichen Energieträgers, wie etwa Erdgas, Brennstoff oder elektrischer Strom.
- Zusätzlich soll die Kapazität der Gesamtanlage erhöht werden, wobei durch eine Entlastung des Bandtrockners eine Verdoppelung der Kapazität möglich erscheint.

Das Material wurde in einer Radladerschaufel zum Einfüllrichter geführt. Die Beschickung des Einfülltrichters erfolgte dann manuell. Aus dem Einfülltrichter wurde das Material mit einer Transportschnecke in die Presse befördert. Die Entwässerungsschnecke ist in der Geometrie 2-stufig ausgeführt. Nach der 1.Stufe befindet sich ein konischer Bereich, nach diesem beginnt die 2. Stufe. Die Drehzahl der Transportschnecke konnte eingestellt werden (FU in %). Für den Weitertransport in die Presse war teilweise ein manuelles "Stochern" notwendig. Die Drehzahl der Entwässerungsschnecke konnte ebenfalls eingestellt werden (FU in %). Das entwässerte Material fiel direkt in den dafür vorgesehenen Container. Die flüssige Phase wurde ebenfalls in einem dafür vorgesehenen Container aufgefangen. Die im Flüssigbereich eingebaute Schnecke wurde nicht gebraucht. Die Versuche wurden in einer Fotodokumentation festgehalten. Die Feuchtemessungen wurden im hauseigenen Labor durchgeführt. Von allen Proben wurden Rückstellmuster aufbewahrt. Von dem entwässerten Material wurden Proben in Kübeln mit einem Fassungsvermögen von 10 Litern entnommen.

### Versuch 1: Input nasse Späne

Die Umgebungstemperatur betrug 0°-2°C. Die Austragung aus dem Einfülltrichter musste dosiert erfolgen. Ebenfalls wurde der Weitertransport von der Zuführschnecke zur Entwässerungsschnecke ständig kontrolliert. Teilweise musste "gestochert" werden. Das Material wurde großteils am Ende der 1.Stufe entwässert. Der konische Bereich am Ende der 1.Stufe staute das Material. Es trat auch verstärkt Material in die flüssige Phase aus. Dieses "Hindernis" schränkte die Leistung stark ein. Die Entwässerung der 2.Stufe leistete nur einen geringen Anteil. Die Wärmeerzeugung verdampfte einen Teil des Wassers. Das gepresste und entwässerte Zwischenmaterial ist in der Konsistenz etwas klumpig und lässt sich leicht auflösen. Die Temperatur des Zwischenmaterials betrug etwa 36°C.

### Versuch 2: Input Hackschnitzel

Die eingegebenen Hackschnitzel waren etwa 35mm groß. Der Stau an der 1.Stufe war noch stärker als bei Versuch1 mit Sägespänen (Versuch 1). Das Material presste sich auch stärker durch die Lamellen heraus. Das entwässerte Material war stark homogenisiert. D.h. die Struktur war zerkleinert, jedoch konnten die Holzstruktur noch klar erkannt werden. Die Temperatur des ausgepressten Zwischenmaterials betrug etwa 40°C.

### Versuch 3: Input Fremdmaterial

Als Rohmaterial wurden aufbereitete Holzfasern der Fa. Celltechnik Lodenau verwendet. Das Material hatte eine sehr hohe Eingangsfeuchte (>67%). Die Struktur war den Spänen sehr ähnlich. Der Stau an der 1.Stufe war deutlich geringer. Dadurch war die Durchsatzleistung erheblich höher. Der 2.Teil der Schnecke trug mehr zur Entwässerung bei als bei den vorigen Versuchen. Aufgrund des im Versuch erzielten Durchsatzes wurde die Leistung auf etwa 500kg/ h Input geschätzt.

### Versuch 4: Input Späne

Ziel dieses Versuches war es, Späne mit einer "aufgewärmten" Maschine zu entwässern. Es traten jedoch zu Versuch 1 keine signifikanten Unterschiede auf. Festzustellen war, dass der Auswurf unregelmäßig war. Als Ursache kann ein Stau an der 1.Stufe vermutet werden, der sich schubweise abbaut.

### Versuch 5: Input Fremdmaterial

Das Ergebnis entsprach dem Versuch3. Es bildete sich ebenso ein Stau an der 1.Stufe. Die Leistung wurde auf 600 - 700 kg/h Input geschätzt. Bei höherer Drehzahl der Schnecke erhöhte sich die Leistung nicht.

In allen Versuchen wurden von dem aufgefangenen entwässerten Material Proben genommen und zur Analyse der Inhaltsstoffe an ein Fachlabor übermittelt.

Die Daten der Versuche sind in Tabelle 1 zusammengefasst.

**Tabelle 1: Ergebnisse der Versuche 1 bis 5**

| Vers. | Beleg | Motor-leistung % | Dosier-schnecke % | Material | Feuchte IN | MW; STABW | Feuchte OUT | MW; STABW | Anmerkung |
|---|---|---|---|---|---|---|---|---|---|
| V1 | 0 | | | Späne | | | 33,50% | 33,5% | |
| | | | | | | | 33,03% | 0,38% | |
| | | | | | | | 33,95% | | |
| V1 | 1 | 40 | | Späne | 55,94% | 55,8% | 33,29% | 33,5% | 15 00 Uhr |
| | | | | | 55,41% | 0,25% | 34,22% | 0,48% | Temp 1,8° |
| | | | | | 55,92% | | 33,13% | | |
| V1 | 1b | | | Späne | | | 32,30% | 32,3% | |
| | | | | | | | 31,77% | 0,37% | |
| | | | | | | | 32,68% | | |
| V1 | 1c | | | Späne | | | 31,91% | 31,6% | |
| | | | | | | | 32,03% | 0,50% | |
| | | | | | | | 30,91% | | |
| V1 | 1 | 40 | | Späne | 57,09% | 57,9% | 28,68% | 28,3% | Maschine nicht auf Betriebstemperatur Späne gepresst; leichte klumpen; dampfend; 36,4° |
| | | | | | 58,55% | 0,60% | 27,79% | 0,39% | |
| | | | | | 58,03% | | 28,51% | | |
| V1 | 1 | 40 | | Späne | 56,27% | 53,5% | 29,29% | 28,0% | |
| | | | | | 53,57% | 2,33% | 23,73% | 3,11% | |
| | | | | | 50,56% | | 31,03% | | |
| V2 | 2 | | | Hackgut | 33,72% | 37,8% | 27,75% | 26,9% | 35mm Material |
| | | | | | 42,49% | 3,61% | 27,16% | 0,87% | Stromaufnahme am hochsten |
| | | | | | 37,09% | | 25,68% | | |
| V2 | 1 | 40 | | Hackgut | | | 6,42% | 29,6% | |
| | | | | | | | 29,48% | 0,11% | |
| | | | | | | | 29,69% | | |
| V2 | | 65 | | Hackgut | | | 30,06% | 31,7% | Input 1°; Außen 0° |
| | | | | | | | 30,66% | 1,93% | |
| | | | | | | | 34,42% | | |
| V2 | 2 | 60 | | Hackgut | | | 30,64% | 30,3% | |
| | | | | | | | 30,37% | 0,26% | |
| | | | | | | | 30,01% | | |
| V2 | 3 | 80 | | Hackgut | | | 26,30% | 28,9% | gröbere Struktur |
| | | | | | | | 32,28% | 2,52% | größere Leistung |
| | | | | | | | 27,98% | | |
| V2 | 4 | 90 | | Hackgut | | | 29,05% | 29,0% | 40° |
| | | | | | | | 28,87% | 0,08% | größere Leistung |
| | | | | | | | 29,04% | | gröbere Struktur |
| V2 | 5 | 50 | | Hackgut | | | 30,46% | 29,9% | gleiche Leistung |
| | | | | | | | 28,95% | 0,70% | höhere Stromaufnahme |
| | | | | | | | 30,39% | | stochern; stark dampfend |
| V2 | 6 | 50 | | Hackgut | | | 25,89% | 26,6% | ohne Stochern |
| | | | | | | | 26,16% | 0,86% | grobes Material; besserer Durchsatz |
| | | | | | | | 27,83% | | |
| V2 | 7 | | | Hackgut | | | 28,87% | 28,1% | Auslaufmaterial |
| | | | | | | | 27,74% | 0,54% | Stopfen in Einlauf notwendig |
| | | | | | | | 27,72% | | |
| V3 | 0 | 40 | 20 | Fremd | 67,44% | 67,4% | 30,90% | 31,2% | 20% Dosierschnecke; 30A gleichmäßiger starker Durchsatz gleichmäßige Entwässerung |
| | | | | | 67,51% | 0,07% | 30,22% | 0,99% | |
| | | | | | 67,34% | | 32,58% | | |
| V3 | 1 | 40 | 15 | Fremd | | | 32,28% | 32,5% | 15% Dosier; 40A |
| | | | | | | | 32,70% | 0,17% | |
| | | | | | | | 32,42% | | |
| V3 | 2 | 40 | 20 | Fremd | | | 28,33% | 29,0% | 20%; 45A |
| | | | | | | | 29,98% | 0,70% | |
| | | | | | | | 28,75% | | |
| V3 | 3 | 50 | 20 | Fremd | | | | | 20%; 50A |
| V4 | 1 | 50 | | Späne | 57,07% | 55,7% | 28,91% | 29,0% | warmer Betriebszustand, vorher Versuche Fremd |
| | | | | | 55,36% | 0,98% | 29,19% | 0,11% | wenig bis mittlerer Durchsatz |
| | | | | | 54,75% | | 29,04% | | |
| V4 | 2 | 60 | | Späne | | | 32,83% | 31,6% | etwas mehr Leistung Entwässerung fast nur 1.Drittel kein regelmäßiger Auswurf |
| | | | | | | | 29,79% | 1,33% | |
| | | | | | | | 32,31% | | |
| V5 | | 55 | 22,5 | Fremd | | | 32,94% | 32,4% | 12:55 Uhr |
| | | | | | | | 31,86% | 0,44% | |
| | | | | | | | 32,34% | | |

## Patentansprüche

1. Verfahren zur Verringerung des Feuchtegehalts eines schüttfähigen, vorzugsweise organischen Rohmaterials, wie etwa Hackgut oder Späne, insbesondere aus Holz, wobei das Rohmaterial eine Anfangsfeuchte aufweist und wobei das Verfahren durch die folgenden Schritte gekennzeichnet ist:
- kontinuierliches Zuführen des Rohmaterials in eine mechanische, kontinuierliche Presse;
- mechanisches Auspressen des Materials in der kontinuierlichen Presse zu einem schüttfähigen Zwischenmaterial, das eine Zwischenproduktfeuchte aufweist;
- thermisches Trocknen des zwischenproduktfeuchten Zwischenmaterials zu einem pelletierbaren Schüttgut, welches eine Verarbeitungsfeuchte aufweist.

2. Verfahren nach Anspruch 1, **dadurch gekennzeichnet, dass** das mechanische Auspressen in einer Schneckenpresse, vorzugsweise in einer Hochdruckpresse, beispielsweise mit einem Betriebsdruck von 300 bar axial, erfolgt.

3. Verfahren nach Anspruch 1 oder 2, **dadurch gekennzeichnet, dass** thermische Trocknen in einem Trommeltrockner oder einem Bandtrockner erfolgt.

4. Verfahren nach einem der Ansprüche 1 bis 3, **dadurch gekennzeichnet, dass** die Anfangsfeuchte im Bereich von etwa 35 - 60 Gew.-%, die Zwischenproduktfeuchte im Bereich von etwa 25 - 35 Gew.-% und die Verarbeitungsfeuchte im Bereich von etwa 10 - 15 Gew.-% liegt.

5. Verfahren nach einem der Ansprüche 1 bis 4, **dadurch gekennzeichnet, dass** das Rohmaterial Späne sind, wobei die Anfangsfeuchte bevorzugt im Bereich von etwa 50 - 60 Gew.-%, die Zwischenproduktfeuchte im Bereich von etwa 27 - 33 Gew.-% und die Endfeuchte im Bereich von etwa 10 - 13 Gew.-% liegt.

6. Verfahren nach einem der Ansprüche 1 bis 4, **dadurch gekennzeichnet, dass** das Rohmaterial Hackgut ist, wobei die Anfangsfeuchte bevorzugt im Bereich von etwa 35 - 45 Gew.-%, die Zwischenproduktfeuchte im Bereich von etwa 25 - 38 Gew.-% und die Verarbeitungsfeuchte im Bereich von etwa 10 - 13 Gew.-% liegt.

7. Verfahren nach Anspruch 6, **dadurch gekennzeichnet, dass** das Hackgut vor der Verarbeitung homogenisiert wird.

8. Verfahren nach einem der Ansprüche 1 bis 7 **dadurch gekennzeichnet, dass** die mechanisch ausgepresste Flüssigkeit (Pressflüssigkeit) gesammelt und einer Weiterverarbeitung zugeführt wird.

9. Verfahren nach Anspruch 8, **dadurch gekennzeichnet, dass** die Pressflüssigkeit zur Erzeugung eines Lebensmittel- und/oder Gesundheitsprodukts gereinigt wird.

10. Verfahren nach Anspruch 8 oder 9, **dadurch gekennzeichnet, dass** aus der Pressflüssigkeit wirkstoffhaltige Substanzen, insbesondere ätherische Holzinhaltsstoffe, wie etwa Öle und Harze, extrahiert und einer Weiterverarbeitung bzw. einem Vertrieb zugeführt werden.

11. Verfahren zu Herstellung von Pellets aus einem schüttfähigen Rohmaterial, das eine Anfangsfeuchte aufweist, **dadurch gekennzeichnet** das Rohmaterial durch ein Verfahren nach einem der Ansprüche 1 bis 10 zu einem pelletierbaren Schüttgut verarbeitet wird, welches eine Verarbeitungsfeuchte aufweist, und dass das pelletierbare Schüttgut zu Pellets gepresst wird.

12. Verfahren zur Herstellung von Lebensmittel- oder Gesundheitsprodukten aus der in einem Verfahren gemäß einem der Ansprüche 1 bis 11 beim mechanischen Auspressen erhaltenen Pressflüssigkeit, wobei die Pressflüssigkeit zu einem physiologisch verträglichen Stoff gereinigt wird.

13. Verfahren zur Herstellung eines ätherischen Nebenprodukts aus der in einem Verfahren gemäß einem der Ansprüche 1 bis 12 beim mechanischen Auspressen erhaltenen Pressflüssigkeit, wobei Holzinhaltsstoffe, wie etwa Öle und Harze, aus der Pressflüssigkeit extrahiert werden.
